# EUROPÄISCHE PATENTSCHRIFT

(11) **EP 1 167 459 B1**
(45) Veröffentlichungstag und Bekanntmachung des Hinweises auf die Patenterteilung: **10.03.2004**
(21) Anmeldenummer: 01114281.7
(22) Anmeldetag: 13.06.2001
(51) Int. Cl.: C09B 7/00

(54) **Verfahren zur Herstellung von trans-Thiazinindigo-Pigmenten**
Process for the preparation of trans-thiazine-indigo pigments
Procédé pour la préparation de pigments de trans-thiazine-indigo

(30) Priorität: 21.06.2000 DE 10030475
(43) Veröffentlichungstag der Anmeldung: 02.01.2002
(73) Patentinhaber: Clariant GmbH, 65929 Frankfurt am Main (DE)
(72) Erfinder: Rothe, Petra Maria, Dr., 65779 Kelkheim (DE); Unverdorben, Leonhard, Dr., 61130 Nidderau (DE); Piastra, Bruno, Dr., 68330 Huningue (FR)
(74) Vertreter: Hütter, Klaus, Dr.

(56) Entgegenhaltungen:
- EP-A- 1 036 821
- WO-A-98/32800
- DE-A- 2 536 120
- KAUL B L: "studies on heterocyclic colouring matters" HELVETICA CHIMICA ACTA, VERLAG HELVETICA CHIMICA ACTA. BASEL, CH, Bd. 57, Nr. 8, 1974, Seiten 2664-2678, XP002140383 ISSN: 0018-019X

## Beschreibung

Die vorliegende Erfindung betrifft ein verbessertes Verfahren zur Herstellung symmetrischer und unsymmetrischer trans-Thiazinindigo-Pigmente.

Thiazinindigo-Pigmente sind eine industriell bedeutsame Klasse von organischen Pigmenten. Sie können durch Umsetzung von carbo- oder heterocyclischen o-Aminomercapto-Verbindungen mit Maleinsäurederivaten in polar aprotischen Lösemitteln (DE-A-2 151 723, DE-A-2 536 120) hergestellt werden.
Ein verbessertes Verfahren ist in der WO 98/32 800 A1 beschrieben. Die bekannten Verfahren sind jedoch hinsichtlich Ausbeute und Produktqualität verbesserungsbedürftig.

Die Aufgabe der vorliegenden Erfindung bestand darin, ein Verfahren zur Herstellung von trans-Thiazinindigo-Pigmenten zur Verfügung zu stellen, das höhere Ausbeuten, reinere und brillantere Produkte sowie ökologische und ökonomische Vorteile im Vergleich zu den bekannten Verfahren liefert.

Diese Aufgabe konnte überraschenderweise durch eine Einstufenreaktion unter Einhaltung bestimmter, nachstehend definierter Temperatur- und Druckbedingungen gelöst werden.

Gegenstand der vorliegenden Erfindung ist ein Verfahren zur Herstellung von symmetrischen oder unsymmetrischen trans-Thiazinindigo-Pigmenten der Formel (1) 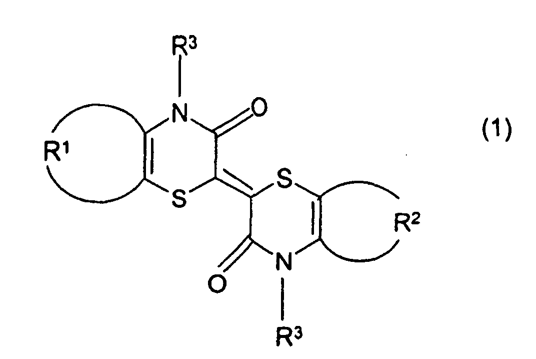 wobei
- R¹ und R²: gleich oder verschieden sind und jeweils einen zur Vervollständigung eines substituierten oder unsubstituierten aromatischen oder aliphatischen carbocyclischen oder heterocyclischen Ringsystems erforderlichen Rest darstellen, und
- R³: Wasserstoff, C₁-C₁₂-Alkyl oder Phenyl bedeutet,
dadurch gekennzeichnet, dass in einem wässrigen Medium eine Verbindung der Formel (2) mit einer Verbindung der Formel (3a) oder (3b), oder eine Verbindung der Formel (4) mit einer Verbindung der Formel (3a) und/oder (3b) 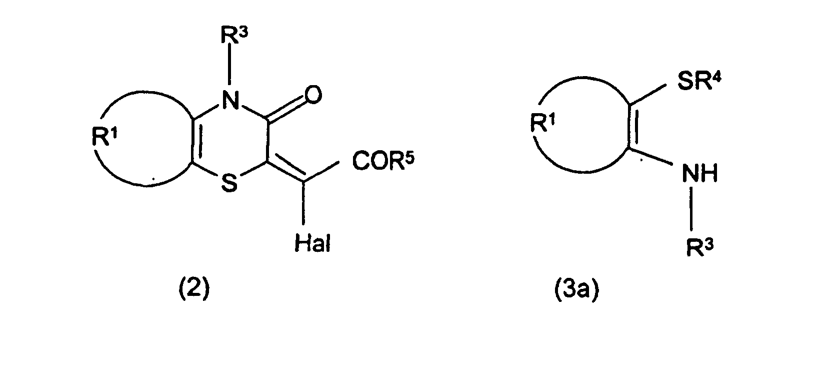 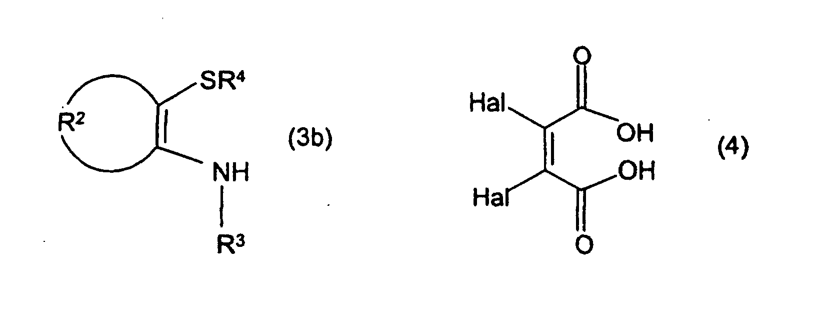 worin
- R¹, R² und R³: wie vorstehend definiert sind,
- R⁴: Wasserstoff oder ein Metallion aus der Gruppe Na⁺, K⁺ oder Zn²⁺/2,
- R⁵: eine Abgangsgruppe, und
- Hal: Cl oder Br ist;

a) kondensiert wird, wobei die Reaktionsmischung für mindestens 1 Stunde bei einer Temperatur zwischen 30 und 65°C gehalten wird, und danach
b) die Reaktionsmischung in Gegenwart eines Säureamids für mindestens 1 Stunde bei einer Temperatur zwischen 100 und 180°C und einem Druck zwischen 1,5 und 50 bar, vorzugsweise 2 und 20 bar, gehalten wird.

Unter symmetrischen trans-Thiazinindigo-Pigmenten werden solche verstanden, in denen die Reste R¹ und R² gleich sind.
Unter unsymmetrischen trans-Thiazinindigo-Pigmenten werden solche verstanden, in denen die Reste R¹ und R² verschieden sind.

Symmetrische trans-Thiazinindigo-Pigmente entstehen bei der Umsetzung der Verbindung der Formel (2) mit der Verbindung der Formel (3a), wobei das bevorzugte molare Verhältnis (2):(3a) etwa 1:1 bis 1:5, insbesondere 1:1 bis 1:1,1, beträgt.

Symmetrische trans-Thiazinindigo-Pigmente entstehen auch bei der Umsetzung der Verbindung der Formel (4) mit einer etwa zweifach molaren Menge der Verbindung der Formel (3a) oder (3b), vorzugsweise bei einem molaren Verhältnis (4):(3a) oder (3b) von 1:2 bis 1:5, insbesondere 1:2 bis 1:2,2.

Unsymmetrische trans-Thiazinindigo-Pigmente entstehen bei der Umsetzung der Verbindung der Formel (2) mit der Verbindung der Formel (3b), wobei das bevorzugte molare Verhältnis (2):(3b) etwa 1:1 bis 1:5, insbesondere 1:1 bis 1:1,1, beträgt.

Unsymmetrische trans-Thiazinindigo-Pigmente entstehen auch bei der Umsetzung der Verbindung der Formel (4) mit einer etwa equimolaren Menge der Verbindung (3a) und einer etwa equimolaren Menge der Verbindung (3b), vorzugsweise bei einem molaren Verhältnis (4):(3a + 3b) von 1:2 bis 1:3.

Setzt man ein Gemisch aus den Verbindungen (3a) und (3b) ein, so können Mischungen aus unsymmetrischen und den beiden symmetrischen Produkten entstehen, insbesondere wenn das molare Verhältnis von (3a):(3b) nicht equimolar ist.

Anstelle der Verbindungen der Formeln (3a) und (3b) können auch die entsprechenden Aminothiazole der Formeln (3c) und (3d) 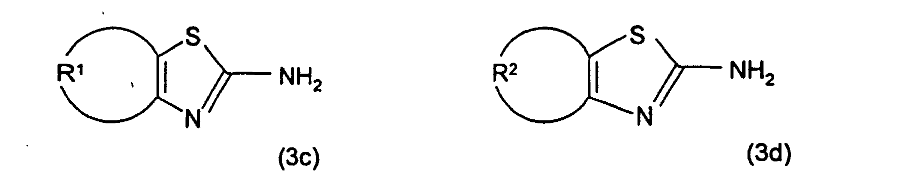 eingesetzt werden, die meist kommerziell erhältlich sind. Durch alkalische Ringspaltung, beispielsweise in Gegenwart von Kali- oder Natronlauge und bei Temperaturen zwischen 100 und 200°C, vorzugsweise zwischen 110 und 150°C, entstehen die o-Aminomercapto-Verbindungen der Formeln (3a) und (3b), die gegebenenfalls nach Ansäuern wie vorstehend beschrieben umgesetzt werden.

Es ist ein wichtiger verfahrenstechnischer Vorteil, dass das erfindungsgemäße Verfahren als Einstufenreaktion durchgeführt werden kann. Die Ringschlußreaktion, d.h. die Kondensation zum cis-Thiazinindigo, erfolgt bei Temperaturen zwischen 30 und 65°C in Schritt a). Ohne Isolierung des cis-Produktes wird die Reaktionsmischung dann in Gegenwart eines Säureamids unter Druck erhitzt (Schritt b), wobei gleichzeitig die Isomerisierung zum gewünschten trans-Produkt und der Pigmentfinish stattfindet. Das Säureamid kann von Anfang an in der Reaktionsmischung enthalten sein und/oder vor dem Aufheizen gemäß b) zugegeben werden. Die Menge an Säureamid liegt zweckmäßigerweise zwischen 5 und 70 Gew.-%, insbesondere zwischen 20 und 40 Gew.-%, bezogen auf das Gesamtgewicht der Reaktionsmischung in Schritt b). Als Säureamide kommen vorzugsweise cyclische Carbon- und Sulfonsäureamide, insbesondere N-Methyl-pyrrolidon in Betracht.

Das wässrige Medium enthält Wasser, gegebenenfalls eine Säure oder eine Base und gegebenenfalls ein mit Wasser lösliches Lösemittel, z.B. einen Alkohol. Als Säuren kommen beispielsweise Carbonsäuren, z.B. Essigsäure, anorganische Säuren, z.B. Schwefelsäure, Salzsäure oder Phosphorsäure, in Betracht. Es können auch Salze dieser Säuren, insbesondere Puffer enthalten sein. Als Basen kommen beispielsweise Natrium- und Kaliumhydroxid oder organische Basen, wie Triethylamin, in Betracht.

Die Säuren sind zweckmäßigerweise in einer solchen Menge im wässrigen Medium enthalten, dass im Schritt a) und b) der pH-Wert zwischen 0 und 3, bevorzugt zwischen 1 und 2, insbesondere zwischen 1 und 1,5, liegt. Die Menge an Säure beträgt vorzugsweise 10 bis 40 Gew.-%, insbesondere 10 bis 20 Gew.-%, bezogen auf das Gesamtgewicht der Reaktionsmischung.

Es wurde gefunden, dass die Bildung von coloristisch störenden Monokondensationsprodukten weitgehend unterdrückt werden kann, wenn ein bestimmtes Temperaturprofil eingehalten wird. Die Reaktionsmischung wird für mindestens 1 Stunde, vorzugsweise 1 bis 6 Stunden, insbesondere 2 bis 4 Stunden, bei einer Temperatur zwischen 30 und 65°C, vorzugsweise zwischen 35 und 50°C, gehalten.

Zur Erhöhung der Raum-Zeit-Ausbeute kann es vorteilhaft sein, im Anschluss an die erfolgte Kondensation das Wasser aus dem Reaktionsmedium teilweise oder vollständig abzudestillieren.

Zur Isomerisierung und zum Finish wird das Reaktionsgemisch in Gegenwart des Säureamids erhitzt und für mindestens 1 Stunde, vorzugsweise 1 bis 8 Stunden, insbesondere 2 bis 5 Stunden, bei 100 bis 180°C, bevorzugt 110 bis 160°C, insbesondere 130 bis 150°C, gehalten. Im geschlossenen System erhöht sich dabei der Druck auf 1,5 bis 50 bar, vorzugsweise 2 bis 20 bar, insbesondere 5 bis 10 bar.

Die Isolierung des dabei entstandenen trans-Thiazinindigo-Pigments erfolgt durch übliche Methoden, wie z.B. Abdestillieren des flüssigen Mediums oder Filtration des Pigments, Waschen und Trocknen.

In einer bevorzugten Ausführungsform des erfindungsgemäßen Verfahrens erfolgt die Umsetzung in Gegenwart von Additiven, die die Kristallisation inhibieren, wie z.B. Chinacridoncarbonamide oder -sulfonamide oder Thiazinindigocarbonamide oder - sulfonamide, wie z.B. solche der nachstehenden Formel

P―Xₘ,

wobei
- P: für einen Rest eines linearen, unsubstituierten Chinacridons oder eines linearen 2,9-Dimethylchinacridons oder eines Thiazinindigorests steht
- m: eine Zahl von 1 bis 4 ist und
- X: eine Gruppe der Formel -CONR⁸R⁹ oder -SO₂NR⁸R⁹ steht, in der R⁸ und R⁹ unabhängig voneinander H, C₁-C₁₈-Alkyl, Phenyl,Naphthyl, C₅-C₁₀-Cycloalkyl oder 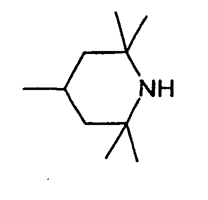 bedeuten.

Weiterhin kann die Gegenwart von Dispergierhilfsmitteln, wie z.B. ein ®Sandopan, oder Wachs vorteilhaft sein.

In einer weiteren bevorzugten Ausführungsform des erfindungsgemäßen Verfahrens wird das Reaktionsgemisch während der Kondensation und/oder während der Isomerisierung einer Mahlung unterworfen, beispielsweise mittels einer Kolloidalmühle.

Bevorzugte Verbindungen, die durch das vorliegende Verfahren hergestellt werden, sind solche der Formel (1), worin R¹ und R² jeweils einen Rest der Formeln (a) bis (i) bedeuten, 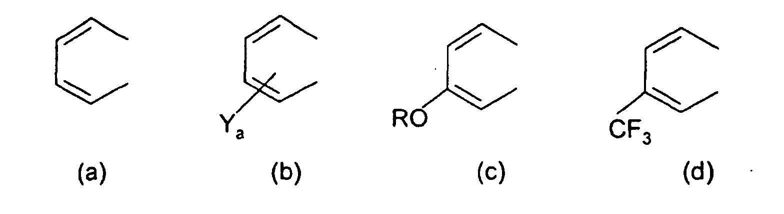 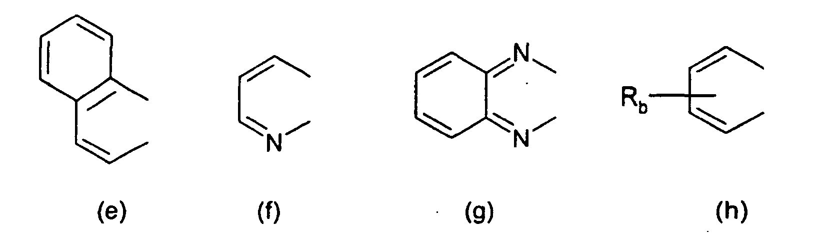 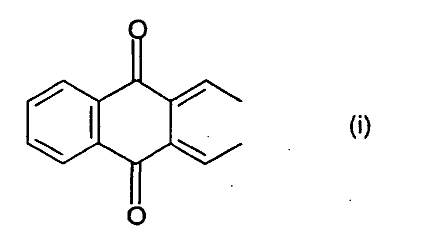 in denen
- Y: ein Halogen, vorzugsweise Chlor oder Brom, oder ein Pseudohalogen, vorzugsweise CN,
- R: ein verzweigtes oder lineares C₁-C₈-Alkyl, vorzugsweise C₁-C₄-Alkyl, insbesondere Methyl oder Ethyl,
- a: die Zahl 1, 2, 3 oder 4 und
- b: die Zahl 1, 2, 3 oder 4 bedeuten.

Bevorzugte Reste R³ sind Wasserstoff, C₁-C₆-Alkyl oder Phenyl, insbesondere Wasserstoff, Methyl.

In der Ausgangsverbindung der Formel (2) bedeutet R⁵ vorzugsweise OH, Cl, Br, C₁-C₅-Alkoxy.

Durch das erfindungsgemäße Verfahren werden besonders reine und brilliante trans-Thiazinindigo-Pigmente erhalten.

Insbesondere wird der Anteil an coloristisch störendem Monokondensationsprodukt meist auf unter 5 Gew.-% vermindert, gemessen durch HPLC, während bei bislang üblichen Verfahren oftmals 10 bis 15 Gew.-% davon entstehen.

Weiterhin hat die erfindungsgemäße Einstufenreaktion signifikante ökologische und ökonomische Vorteile, da eine Isolierung des bei der Kondensation gebildeten cis-Produktes entfallen kann und somit aufwendige Filtrations-, Wasch- und Trocknungsschritte vermieden werden. Es war überraschend, dass in Gegenwart von Säureamiden, insbesondere von NMP, das cis- zum trans-Produkt in hohen Ausbeuten isomerisiert und gleichzeitig ein Pigmentfinish stattfindet.

In diesem Zusammenhang sei darauf hingewiesen, dass eine direkte Synthese des trans-Produktes, z. B. aus dem entsprechenden Fumarsäurederivat anstelle des Maleinsäurederivats der Formel (4), nicht für industrielle Zwecke geeignet ist, da das Fumarsäurederivat sehr teuer und nicht kommerziell erhältlich ist.

### Beispiel 1

In einem Reaktor werden unter Stickstoffatmosphäre 100 g Kaliumhydroxid und 70 g Wasser vorgelegt und 75,65 g 6-Chlor-2-aminobenzothiazol eingetragen. Die Reaktionsmischung wird unter Rühren für 12 Stunden am Rückfluß erhitzt. Anschließend wird mit 160 g Wasser verdünnt und auf 25°C abgekühlt. 120 g 50 gew.-%ige Schwefelsäure werden bei dieser Temperatur zugetropft, bis ein pH-Wert von 8 erreicht ist. Dieses Reaktionsgemisch wird während 2 Stunden in eine Mischung aus 33 g 2,3-Dichlormaleinsäure, 160 g Wasser und 0,7 g Dispergiermittel ®Sandopan 2N eingeleitet. Das Reaktionsgemisch wird dabei bei 40°C gehalten. Es wird so viel Schwefelsäure (50 gew.-%ig) dazugegeben, dass der pH-Wert bei 1,3 ± 0,2 liegt.
Dabei fällt gelbes cis-7,7'-Dichlorobenzothiazinindigo aus. In den Reaktor werden dann 200 g N-Methyl-pyrrolidon und 0,2 g Eisessig zugetropft und das Reaktionsgemisch für 6 Stunden auf 160°C erhitzt, wobei sich ein Überdruck von 1 bar einstellt. Anschließend wird die Suspension filtriert und der Filterkuchen mit 90°C heißem NMP gewaschen.
Man erhielt 55,2 g trans-7,7'-Dichlorbenzothiazin-indigo (78,4 % d.Th.)

### Beispiel 2

In einem Reaktor werden unter Stickstoffatmosphäre 290 g Wasser vorgelegt und 80,74 g 2-Amino-5-chlorthiophenol-Zn-Salz eingetragen. Diese Suspension wird in 2 Stunden in eine Mischung aus 33 g Dichlormaleinsäure, 160 g Wasser und 0,7 g Dispergiermittel Sandopan 2N eingeleitet. Das Reaktionsgemisch wird dabei bei 40°C gehalten. Es wird so viel Schwefelsäure (50 gew.-%ig) dazugegeben, dass der pH-Wert bei 1,3 ± 0,2 liegt. Dabei fällt gelbes cis-7,7'-Dichlorobenzothiazinindigo aus. In den Reaktor werden dann 200 g N-Methyl-pyrrolidon und 0,2 g Eisessig zugetropft und das Reaktionsgemisch für 6 Stunden auf 160°C erhitzt, wobei sich ein Überdruck von 1 bar einstellt. Anschließend wird die Suspension filtriert und der Filterkuchen mit 90°C heißem NMP gewaschen. Man erhielt 55,2 g trans-7,7'-Dichlorbenzothiazinindigo (78,4 % d.Th.)

### Beispiel 3

In einem Reaktor werden unter Stickstoffatmosphäre 300 g Wasser, 200 g N-Methyl-pyrrolidon, 15 g Schwefelsäure (100 gew.-%ig) vorgelegt, und 83,5 g Dichloromaleinanhydrid und 201 g 2-Amino-5-chlorothiophenol-Zn-Salz eingetragen. Diese Suspension wird in 2 Stunden auf 60°C erhitzt und 2 Stunden bei 60°C gehalten. Dabei fällt gelbes cis-7,7'-Chlorobenzothiazinindigo aus. In den Reaktor werden 200 g N-Methyl-pyrrolidon zugetropft und das Reaktionsgemisch für 6 Stunden auf 160°C erhitzt, wobei sich ein Druck von 2 bar einstellt. Anschließend wird die Suspension auf 100°C gekühlt, filtriert und der Filterkuchen mit 90°C heißem NMP gewaschen. Der Filterkuchen wird unter Vakuum getrocknet. Man erhält 178 g trans-7,7'-Chlorobenzothiazinindigo (90 % d.Th.)

### Beispiel 4

In einem Reaktor werden unter Stickstoffatmosphäre 400 g Wasser, 250 g N-Methyl-pyrrolidon, 15 g Schwefelsäure (100 gew.-%ig) vorgelegt, und 83,5 g Dichloromaleinanhydrid und 180 g 2-Amino-5-methylthiophenol-Zn-Salz eingetragen. Diese Suspension wird in 2 Stunden auf 60°C erhitzt und 2 Stunden bei 60°C gehalten. Dabei fällt gelbes cis-7,7'-Dimethylbenzothiazinindigo aus. In den Reaktor werden 200 g N-Methyl-pyrrolidon zugetropft und das Reaktionsgemisch für 6 Stunden auf 160°C erhitzt, wobei sich ein Druck von 2 bar einstellt.

Anschließend wird die Suspension auf 100°C gekühlt, filtriert und der Filterkuchen mit 90°C heißem NMP gewaschen. Der Filterkuchen wird unter Vakuum getrocknet. Man erhält 160 g trans-7,7'-Dimethylbenzothiazinindigo (90 % d.Th.)

## Patentansprüche

1. Verfahren zur Herstellung von symmetrischen oder unsymmetrischen trans-Thiazinindigo-Pigmenten der Formel (1) 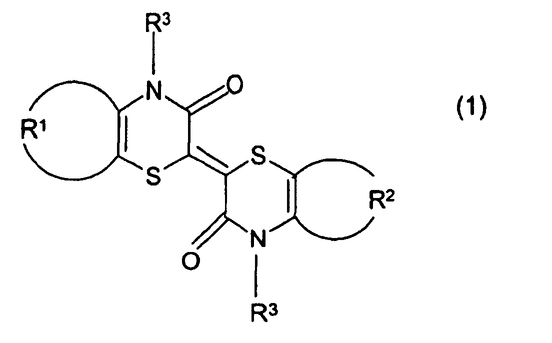 wobei
R¹ und R² gleich oder verschieden sind und jeweils einen zur Vervollständigung eines substituierten oder unsubstituierten aromatischen oder aliphatischen carbocyclischen oder heterocyclischen Ringsystems erforderlichen Rest darstellen, und
R³ Wasserstoff, C₁-C₁₂-Alkyl oder Phenyl bedeutet,
**dadurch gekennzeichnet, dass** in einem wässrigen Medium eine Verbindung der Formel (2) mit einer Verbindung der Formel (3a) oder (3b), oder eine Verbindung der Formel (4) mit einer Verbindung der Formel (3a) und/oder (3b) 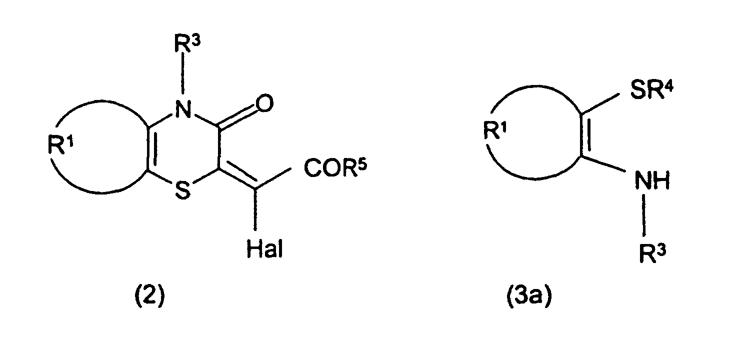 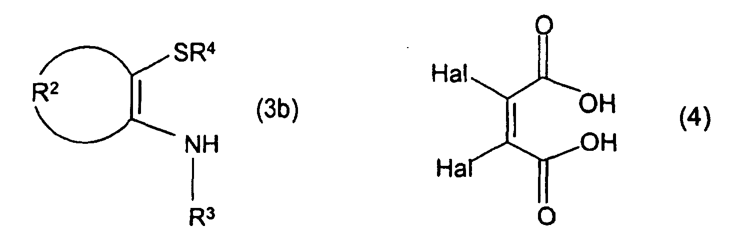 worin
R¹, R² und R³ wie vorstehend definiert sind,
R⁴ Wasserstoff oder ein Metallion aus der Gruppe Na⁺, K⁺ oder Zn²⁺/2,
R⁵ eine Abgangsgruppe, und
Hal Cl oder Br ist;
a) kondensiert wird, wobei die Reaktionsmischung für mindestens 1 Stunde bei einer Temperatur zwischen 30 und 65°C gehalten wird, und danach
b) die Reaktionsmischung in Gegenwart eines Säureamids für mindestens 1 Stunde bei einer Temperatur zwischen 100 und 180°C und einem Druck zwischen 1,5 und 50 bar gehalten wird.

2. Verfahren nach Anspruch 1, **dadurch gekennzeichnet, dass** die Reste R¹ und R² jeweils einen Rest der Formeln (a) bis (i) bedeuten, 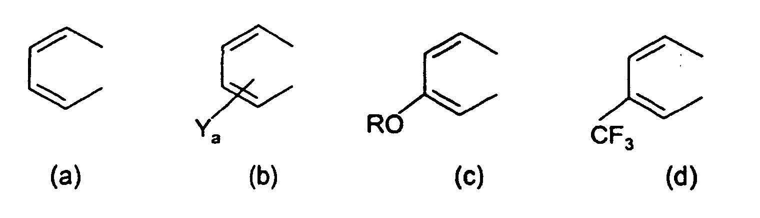 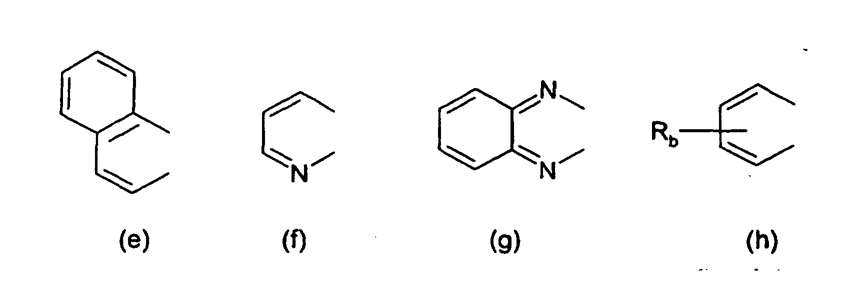 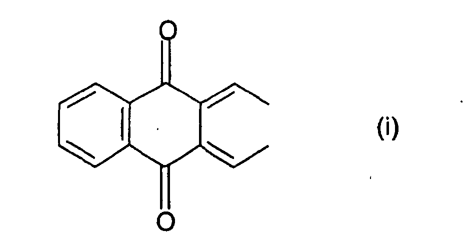 in denen
Y ein Halogen oder ein Pseudohalogen,
R ein verzweigtes oder lineares C₁-C₈-Alkyl,
a die Zahl 1, 2, 3 oder 4 und
b die Zahl 1, 2, 3 oder 4 bedeuten.

3. Verfahren nach Anspruch 1 oder 2, **dadurch gekennzeichnet, dass** die Reaktionsmischung im Schritt a) für 1 bis 6 Stunden, vorzugsweise 2 bis 4 Stunden bei einer Temperatur zwischen 30 und 65 °C gehalten wird.

4. Verfahren nach einem oder mehreren der Ansprüche 1 bis 3, **dadurch gekennzeichnet, dass** die Reaktionsmischung in Schritt a) bei einer Temperatur zwischen 35 und 50°C gehalten wird.

5. Verfahren nach einem oder mehreren der Ansprüche 1 bis 4, **dadurch gekennzeichnet, dass** das Säureamid ein cyclisches Carbon- oder Sulfonsäureamid, vorzugsweise N-Methyl-pyrrolidon, ist.

6. Verfahren nach einem oder mehreren der Ansprüche 1 bis 5, **dadurch gekennzeichnet, dass** die Reaktionsmischung in Schritt b) für 1 bis 8 Stunden, vorzugsweise 2 bis 5 Stunden, bei einer Temperatur zwischen 100 und 180 °C und einem Druck zwischen 1,5 und 50 bar, vorzugsweise zwischen 2 und 20 bar, gehalten wird.

7. Verfahren nach Anspruch 6, **dadurch gekennzeichnet, dass** die Temperatur zwischen 110 und 150°C liegt.

8. Verfahren nach einem oder mehreren der Ansprüche 1 bis 7, **dadurch gekennzeichnet, dass** der pH-Wert in Schritt a) und b) zwischen 0 und 3, bevorzugt zwischen 1 und 2, liegt.

9. Verfahren nach einem oder mehreren der Ansprüche 1 bis 8, **dadurch gekennzeichnet, dass** das Säureamid in einer Menge zwischen 5 und 70 Gew.-%, bezogen auf das Gesamtgewicht der Reaktionsmischung, vorhanden ist.

10. Verfahren nach einem oder mehreren der Ansprüche 1 bis 9, **dadurch gekennzeichnet, dass** die Umsetzung in Gegenwart eines Kristallisationsinhibitors aus der Gruppe der Chinacridoncarbonamide oder -sulfonamide oder der Thiazinindigocarbonamide oder -sulfonamide durchgeführt wird.

11. Verfahren nach einem oder mehreren der Ansprüche 1 bis 10, **dadurch gekennzeichnet, dass** die Reaktionsmischung während der Umsetzung gemahlen wird.

12. Verfahren nach einem oder mehreren der Ansprüche 1 bis 11, **dadurch gekennzeichnet, dass** im Anschluss an Schritt a) das Wasser vollständig oder teilweise abdestilliert wird.

13. Verfahren nach mindestens einem der Ansprüche 1 bis 12, **dadurch gekennzeichnet, dass** ein Aminothiazol der Formel (3c) und/oder (3d) 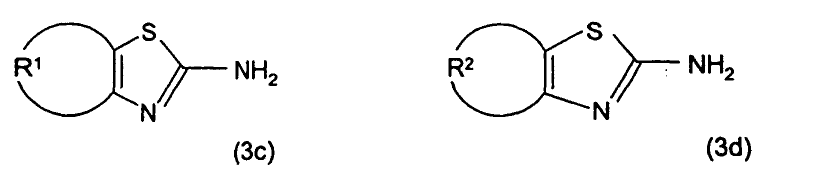 eingesetzt und durch alkalische Ringspaltung zur Verbindung der Formel (3a) und/oder (3b) umgesetzt wird.

## Claims

1. A process for preparing symmetrical or asymmetrical transthiazineindigo pigments of the formula (1) 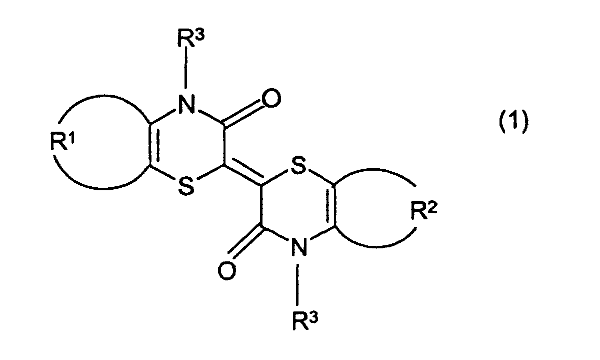 where
R¹ and R² are identical or different and each is a radical required to complete a substituted or unsubstituted aromatic or aliphatic carbocyclic or heterocyclic ring system, and
R³ is hydrogen, C₁-C₁₂-alkyl or phenyl,
which comprises
a) condensing, in an aqueous medium, a compound of the formula (2) with a compound of the formula (3a) or (3b) or a compound of the formula (4) with a compound of the formula (3a) and/or (3b) 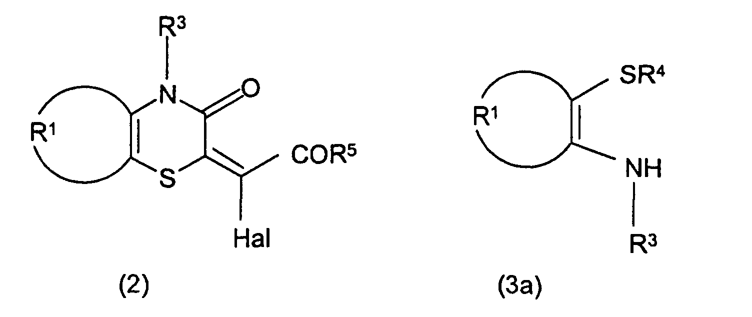 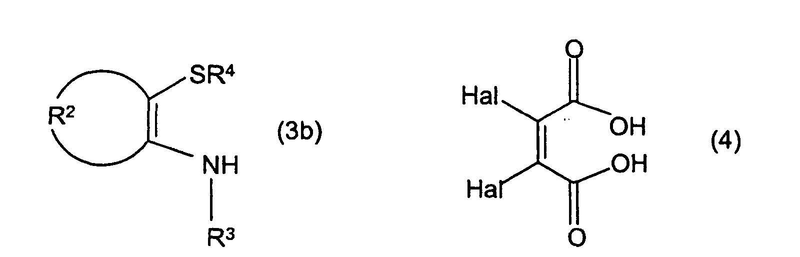 where
R¹, R² and R³ are each as defined above,
R⁴ is hydrogen or a metal ion selected from the group consisting of Na⁺, K⁺ and Zn²⁺/2,
R⁵ is a leaving group, and
Hal is Cl or Br;
by maintaining the reaction mixture at a temperature between 30 and 65°C for at least 1 hour and then
b) maintaining the reaction mixture at a temperature between 100 and 180°C and a pressure between 1.5 and 50 bar for at least 1 hour in the presence of an amide.

2. The process of claim 1, wherein R¹ and R² are each a radical of the formulae (a) to (i) 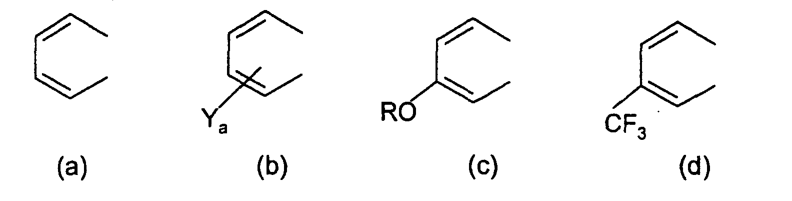 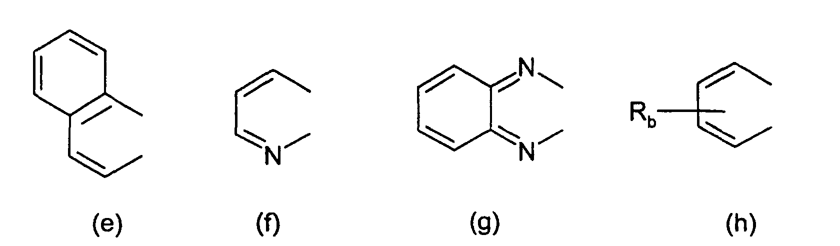 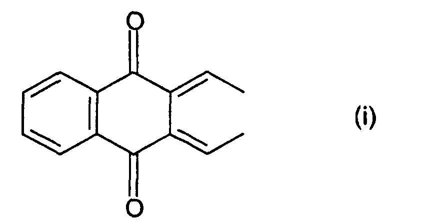 where
Y is halogen or a pseudohalogen,
R is branched or linear C₁-C₈-alkyl,
a is 1, 2, 3 or 4, and
b is 1, 2, 3 or 4.

3. The process of claim 1 or 2, wherein the reaction mixture is maintained at a temperature between 30 and 65°C for 1 to 6 hours, preferably 2 to 4 hours, in step a).

4. The process of one or more of claims 1 to 3, wherein the reaction mixture is maintained at a temperature between 35 and 50°C in step a).

5. The process of one or more of claims 1 to 4, wherein the amide is a cyclic carboxamide or sulfonamide, preferably N-methylpyrrolidone.

6. The process of one or more of claims 1 to 5, wherein the reaction mixture is maintained at a temperature of between 100 and 180°C and a pressure between 1.5 and 50 bar, preferably between 2 and 20 bar, for 1 to 8 hours, preferably 2 to 5 hours, in step b).

7. The process of claim 6, wherein the temperature is between 110 and 150°C.

8. The process of one or more of claims 1 to 7, wherein the pH is between 0 and 3, preferably between 1 and 2, in steps a) and b).

9. The process of one or more of claims 1 to 8, wherein the amide is present in an amount between 5 and 70% by weight, based on the total weight of the reaction mixture.

10. The process of one or more of claims 1 to 9, wherein the reaction is carried out in the presence of a crystallization inhibitor selected from the group of the quinacridonecarboxamides, quinacridonesulfonamides, thiazineindigocarboxamides and thiazineindigosulfonamides.

11. The process of one or more of claims 1 to 10, wherein the reaction mixture is ground during the reaction.

12. The process of one or more of claims 1 to 11, wherein the water is completely or partially distilled off following step a).

13. The process of at least one of claims 1 to 12, wherein an aminothiazole of the formula (3c) and/or (3d) 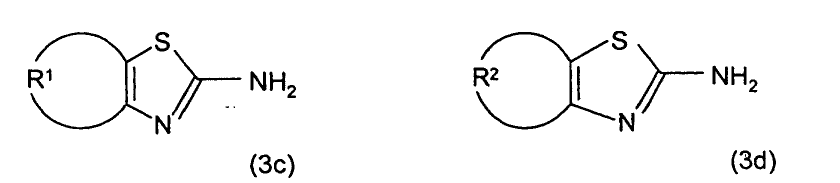 is used and is converted by alkaline ring cleavage into the compound of the formula (3a) and/or (3b).

## Revendications

1. Procédé pour la préparation de pigments à base de trans-thiazinindigo symétriques ou asymétriques de formule (1) 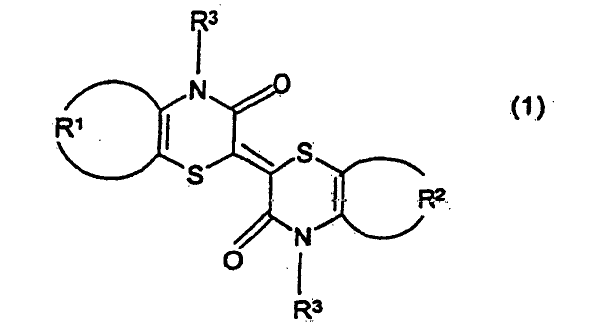 où
R¹ et R² sont identiques ou différents et représentent chacun un reste nécessaire pour compléter un système cyclique aromatique ou aliphatique carbocyclique ou hétérocyclique substitué ou non substitué et
R³ représente un atome d'hydrogène, un groupe alkyle en C₁-C₁₂ ou phényle,
**caractérisé en ce qu'**on condense en milieu aqueux un composé de formule (2) sur un composé de formule (3a) ou (3b), ou un composé de formule (4) sur un composé de formule (3a) et/ou (3b) 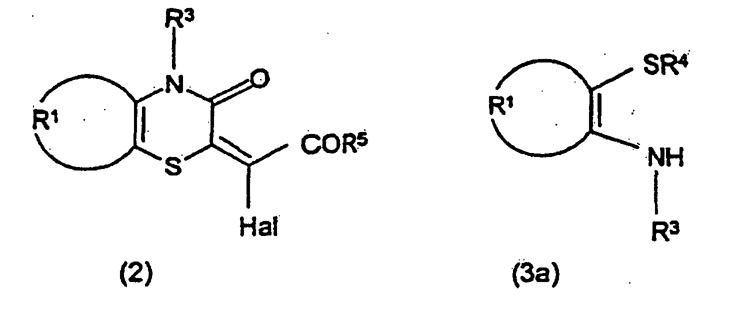 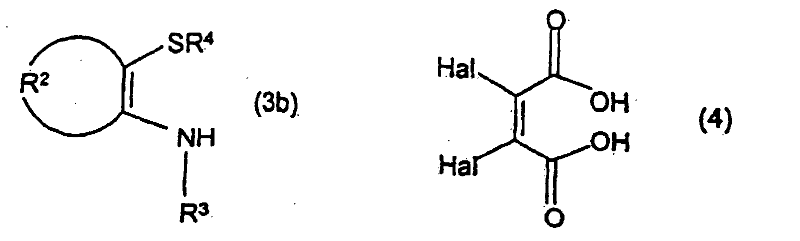 où
R¹, R² et R³ sont définis comme ci-dessus,
R⁴ représente un atome d'hydrogène ou un ion métal du groupe Na⁺, K⁺ ou Zn²⁺/2
R⁵ est un groupe partant et
Hal représente un atome de Cl ou Br ;
a) le mélange réactionnel étant maintenu pendant au moins 1 heure à une température comprise entre 30 et 65°C, et ensuite
b) le mélange réactionnel est maintenu en présence d'un amide d'acide pendant au moins 1 heure à une température comprise entre 100 et 180°C et une pression comprise entre 1,5 et 50 bars.

2. Procédé selon la revendication 1,
**caractérisé en ce que** les restes R¹ et R² représentent chacun un reste de formules (a) à (i) 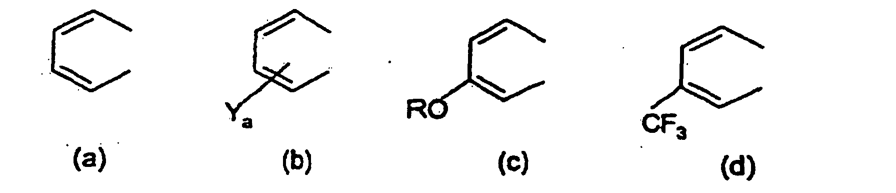 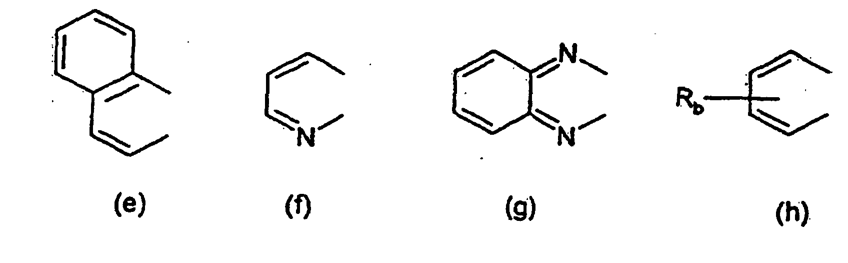 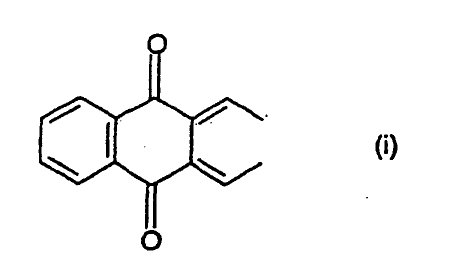 dans lesquelles
Y représente un atome d'halogène ou un pseudohalogène,
R représente un groupe alkyle en C₁-C₈ linéaire ou ramifié,
a vaut 1, 2, 3 ou 4 et
b vaut 1, 2, 3 ou 4.

3. Procédé selon la revendication 1 ou 2, **caractérisé en ce qu'**on maintient le mélange réactionnel à l'étape a) pendant 1 à 6 heures, de préférence pendant 2 à 4 heures, à une température comprise entre 30 et 65°C.

4. Procédé selon une ou plusieurs des revendications 1 à 3, **caractérisé en ce qu'**on maintient le mélange réactionnel à l'étape a) à une température comprise entre 35 et 50°C.

5. Procédé selon une ou plusieurs des revendications 1 à 4, **caractérisé en ce que** l'amide d'acide est un amide cyclique d'un acide carboxylique ou d'acide sulfonique, de préférence la N-méthylpyrrolidone.

6. Procédé selon une ou plusieurs des revendications 1 à 5, **caractérisé en ce qu'**on maintient le mélange réactionnel à l'étape b) pendant 1 à 8 heures, de préférence pendant 2 à 5 heures, à une température comprise entre 100 et 180°C et une pression comprise entre 1,5 et 50 bars, de préférence entre 2 et 20 bars.

7. Procédé selon la revendication 6,
**caractérisé en ce que** la température est comprise entre 110 et 150°C.

8. Procédé selon une ou plusieurs des revendications 1 à 7, **caractérisé en ce que** la valeur du pH à l'étape a) et à l'étape b) est comprise entre 0 et 3, de préférence entre 1 et 2.

9. Procédé selon une ou plusieurs des revendications 1 à 8, **caractérisé en ce que** l'amide d'acide est présent en une quantité comprise entre 5 et 70 % en masse par rapport au poids total du mélange réactionnel.

10. Procédé selon une ou plusieurs des revendications 1 à 9, **caractérisé en ce que** la réaction est mise en oeuvre en présence d'un inhibiteur de cristallisation pris dans le groupe des quinacridonecarboxamides ou -sulfonamides ou des thiazinindigo-carboxamides ou -sulfonamides.

11. Procédé selon une ou plusieurs des revendications 1 à 10, **caractérisé en ce que** le mélange réactionnel est broyé au cours de la réaction.

12. Procédé selon une ou plusieurs des revendications 1 à 11, **caractérisé en ce que**, suite à l'étape a), l'eau est chassée complètement ou partiellement par distillation.

13. Procédé selon une ou plusieurs des revendications 1 à 12, **caractérisé en ce qu'**on utilise un aminothiazole de formule (3c) et/ou (3d) 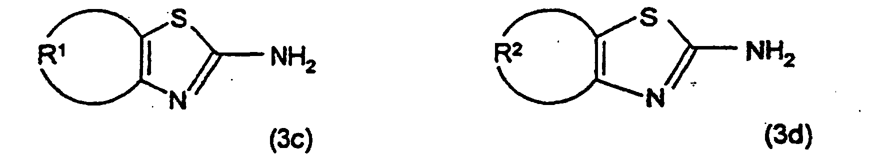 et on transforme par ouverture du noyau en milieu alcalin en composé de formule (3a) et/ou (3b).
